# EUROPEAN PATENT APPLICATION

(11) **EP 4 152 279 A1**
(43) Date of publication of application: **22.03.2023**
(21) Application number: 22184748.6
(22) Date of filing: 13.07.2022
(51) Int. Cl.: G06V 30/10

(54) **IMAGE PROCESSING DEVICE, IMAGE PROCESSING METHOD, AND NON-TEMPORARY RECORDING MEDIUM**

(30) Priority: 21.09.2021 US 202117480302
(71) Applicant: Toshiba TEC Kabushiki Kaisha, Tokyo 141-8562 (JP)
(72) Inventor: Maeda, Tomoki, Shinagawa-ku, Tokyo 141-8562 (JP); Watanabe, Hiroshi, Shinagawa-ku, Tokyo 141-8562 (JP); Suzuki, Hideaki, Shinagawa-ku, Tokyo 141-8562 (JP); Sekine, Masato, Shinagawa-ku, Tokyo 141-8562 (JP); Kamada, Jin, Shinagawa-ku, Tokyo 141-8562 (JP); Sakuma, Sho, Shinagawa-ku, Tokyo 141-8562 (JP); Taguchi, Yuta, Shinagawa-ku, Tokyo 141-8562 (JP)
(74) Representative: Bandpay & Greuter

(57) **Abstract**

An image processing device includes a reader and a controller. The reader acquires a document image formed on a sheet. The controller acquires an area image in a designated area designated in the document image acquired by the reader, performs a character recognition process and a code recognition process on the area image, and in response to the character recognition process not recognizing a character, employs a code recognition result by a code recognition process performed on the area image as a recognition result of the area image.

## Description

### FIELD

Embodiments described herein relate generally to an image processing device, an image processing method, and a non-temporary recording medium.

### BACKGROUND

An image processing device can recognize a character or a code written in a designated area designated by a user for a document image.

In an image processing device in the related art, a user has to designate whether information written in a designated area is a character or a code.

### DISCLOSURE OF THE INVENTION

To this end, there is provided an image processing device comprising: a reader configured to acquire a document image formed on a sheet; and a controller configured to: acquire an area image in an area designated in the document image acquired by the reader, perform a character recognition process and a code recognition process on the area image, and in response to the character recognition process not recognizing a character, employ a code recognition result by the code recognition process performed on the area image as a recognition result of the area image.

Preferably, the controller is configured to, in response to the code recognition process not recognizing a code, employ a character recognition result by the character recognition process performed on the area image as the recognition result of the area image.

Preferably, the controller is configured to, in response to the code recognition process recognizing a code and the character recognition process recognizing a character, employ the code recognition result by the code recognition process performed on the area image and the character recognition result by the character recognition process performed on the area image as the recognition result of the area image.

Preferably, a code recognized by the code recognition process is a barcode or a two-dimensional code.

Preferably, a code recognized by the code recognition process is a stack-type two-dimensional code.

The present invention further relates to an image processing method comprising: acquiring a document image formed on a sheet; acquiring an area image in a designated area designated in the document image; performing a character recognition process and a code recognition process on the area image; and
in response to the character recognition process not recognizing a character, employing a code recognition result by a code recognition process performed on the area image as a recognition result of the area image.

The method may further comprise, in response to the code recognition process not recognizing a code, employing a character recognition result by the character recognition process performed on the area image as the recognition result of the area image.

The method may further comprise, in response to the code recognition process recognizing a code and the character recognition process recognizing a character, employing the code recognition result by the code recognition process performed on the area image and the character recognition result by the character recognition process performed on the area image as the recognition result of the area image.

The present invention further relates to a non-transitory computer-readable medium storing computer-executable instructions that, when executed by one or more processors, perform operations comprising: acquiring a document image formed on a sheet; acquiring an area image in a designated area designated in the document image; performing a character recognition process and a code recognition process on the area image; and in response to the character recognition process not recognizing a character, employing a code recognition result by a code recognition process performed on the area image as a recognition result of the area image.

Preferably, the operations further comprise, in response to the code recognition process not recognizing a code, employing a character recognition result by the character recognition process performed on the area image as the recognition result of the area image.

Preferably, the operations further comprise, in response to the code recognition process recognizing a code and the character recognition process recognizing a character, employing the code recognition result by the code recognition process performed on the area image and the character recognition result by the character recognition process performed on the area image as the recognition result of the area image.

### DESCRIPTION OF THE DRAWINGS

FIG. 1 is an external view illustrating an overall configuration example of an image processing device according to an embodiment;
FIG. 2 is a diagram illustrating a configuration of a control system of the image processing device;
FIG. 3 is a diagram illustrating a barcode;
FIG. 4 is a diagram illustrating a two-dimensional code;
FIG. 5 is a diagram illustrating a character;
FIG. 6 is a diagram illustrating a barcode and a character;
FIG. 7 is a flowchart illustrating a flow of a recognition process; and
FIG. 8 is a flowchart illustrating a flow of the recognition process.

### DETAILED DESCRIPTION

In general, according to at least one embodiment, an image processing device includes an acquisition unit (e.g., an acquisition device, a reader) and a control unit (e.g., a controller). The acquisition unit acquires a document image formed on a sheet. The control unit acquires an area image in a designated area designated in the document image acquired by the acquisition unit, performs a character recognition process and a code recognition process on the area image, and employs a recognition result by a code recognition process performed on the area image as a recognition result of the area image, if a character is not recognized by the character recognition process.

Hereinafter, an image processing device according to at least one embodiment is described with reference to the drawings.

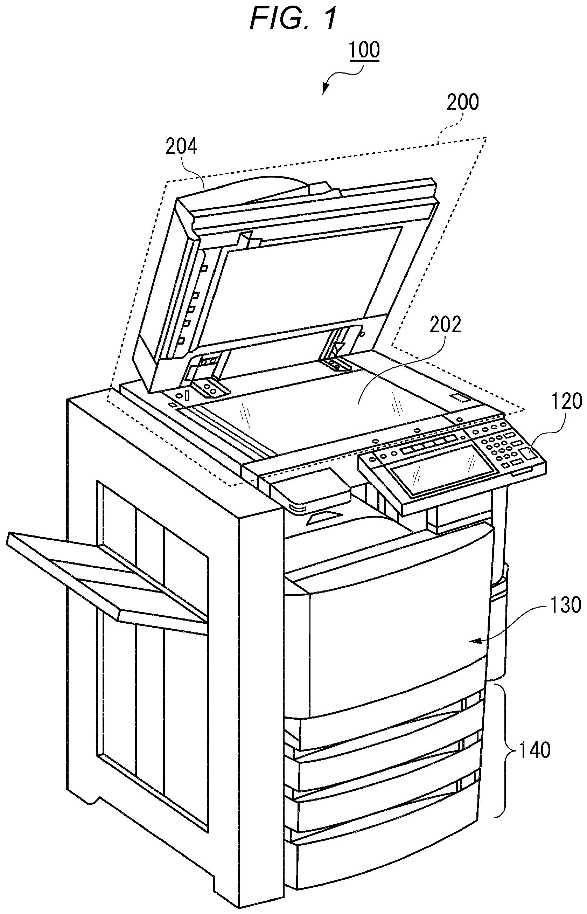

FIG. 1 is an external view illustrating an overall configuration example of an image processing device 100 according to at least one embodiment. The image processing device 100 is, for example, a multifunction device. The image processing device 100 includes a control panel 120, a printer unit 130 (e.g., a printing device, a printer), a sheet container 140, and an image reading unit 200 (e.g., an image reading device, an image reader).

The image processing device 100 forms an image on a sheet by using a developer such as a toner. The sheet is, for example, paper or label paper. The sheet may be any material as long as the image processing device 100 can form an image on the surface thereof.

The control panel 120 has a plurality of buttons. The control panel 120 receives user operations. The control panel 120 outputs a signal according to an operation performed by a user to a control unit (e.g., a controller) of the image processing device 100. The control panel 120 includes a display such as a liquid crystal display and an organic Electro Luminescence (EL) display. The display displays various kinds of information relating to the image processing device 100.

The printer unit 130 forms an image on a sheet based on image information generated by the image reading unit 200 or image information received via a communication path. The printer unit 130 forms an image by, for example, the following process. The image forming unit of the printer unit 130 forms an electrostatic latent image on a photoconductor drum based on the image information. The image forming unit of the printer unit 130 forms a visible image by adhering a developer to the electrostatic latent image. Specific examples of a developer include a toner. A transfer unit (e.g., a transfer device) of the printer unit 130 transfers the visible image onto the sheet. A fixing unit (e.g., a fixing device) of the printer unit 130 fixes the visible image on the sheet by heating and pressurizing the sheet. The sheet on which the image is formed may be a sheet contained in the sheet container 140 or may be a manually fed sheet.

The sheet container 140 contains a sheet used for image formation in the printer unit 130.

The image reading unit 200 reads the image information to be read based on brightness and darkness of light. The image reading unit 200 records the read image information. The recorded image information may be transmitted to another information processing device via a network. The recorded image information may be formed as an image on the sheet by the printer unit 130.

The image reading unit 200 is provided with a platen glass 202 and a platen cover 204. The platen cover 204 is attached to the upper surface of the platen glass 202 in an openable and closable manner.

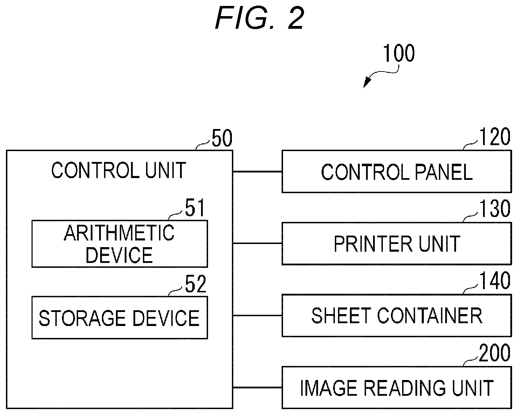

FIG. 2 is a diagram illustrating a configuration of a control system of the image processing device 100.

In FIG. 2, a control unit 50 (e.g., a controller) includes an arithmetic device 51 and a storage device 52. The arithmetic device 51 controls the control panel 120, the printer unit 130, the sheet container 140, and the image reading unit 200 according to various programs stored in the storage device 52.

The arithmetic device 51 controls the entire image processing device 100. The arithmetic unit 51 is, for example, a Central Processing Unit (CPU) (e.g., a central processor), or an Application Specific Integrated Circuit (ASIC). The storage device 52 stores programs, various data, and the like. The storage device 52 is a Read Only Memory (ROM), a Random Access Memory (RAM), or the like.

Subsequently, a recognition process of the area image in the designated area designated by the user is described. The user designates an area to be subjected to the recognition process by using a highlighter or the like on a sheet such as a business form. For example, a user uses a highlighter to draw a curve (for example, a closed curve) that surrounds a barcode or character. The image processing device 100 reads the sheet on which the designated area is indicated with the image reading unit 200. As a result, the image processing device 100 acquires the document image formed on the sheet (e.g., via the acquisition device, the reader).

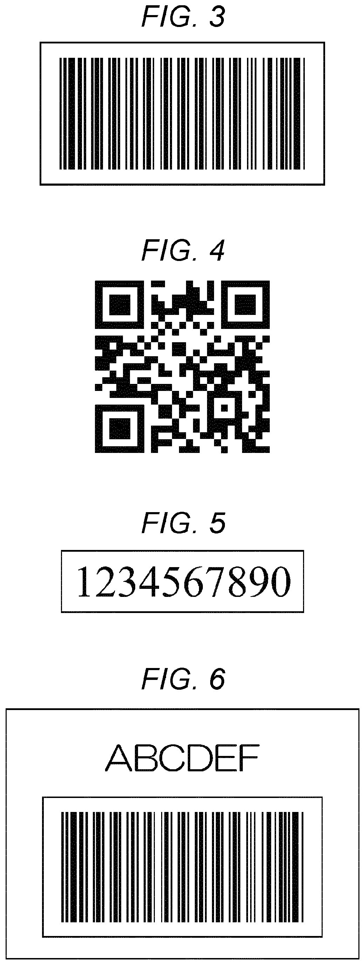

An example of a code that can be recognized by the image processing device 100 in a code recognition process is provided. FIG. 3 is a diagram illustrating an example of a barcode that can be recognized in the code recognition process. FIG. 4 is a diagram illustrating an example of a two-dimensional code that can be recognized in the code recognition process. The two-dimensional code may be a stack-type two-dimensional code in addition to a matrix-type two-dimensional code illustrated in FIG. 4.

An example of a character that can be recognized by the image processing device 100 in the character recognition process is provided. FIG. 5 is a diagram illustrating an example of a character string (e.g., number) that can be recognized in a character recognition process. The character recognition process can recognize not only numbers but also alphabets and Chinese characters.

The image processing device 100 can recognize the character and the code even if both the character and the code are included in the designated area. FIG. 6 is a diagram illustrating an example of a designated area including both characters and codes. The character recognition process recognizes the character string "ABCDEF" and the barcode.

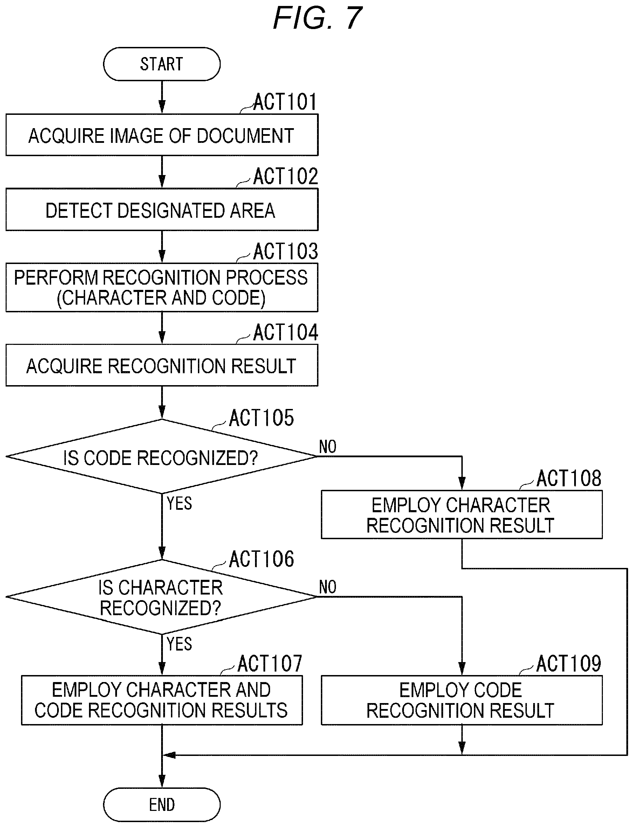

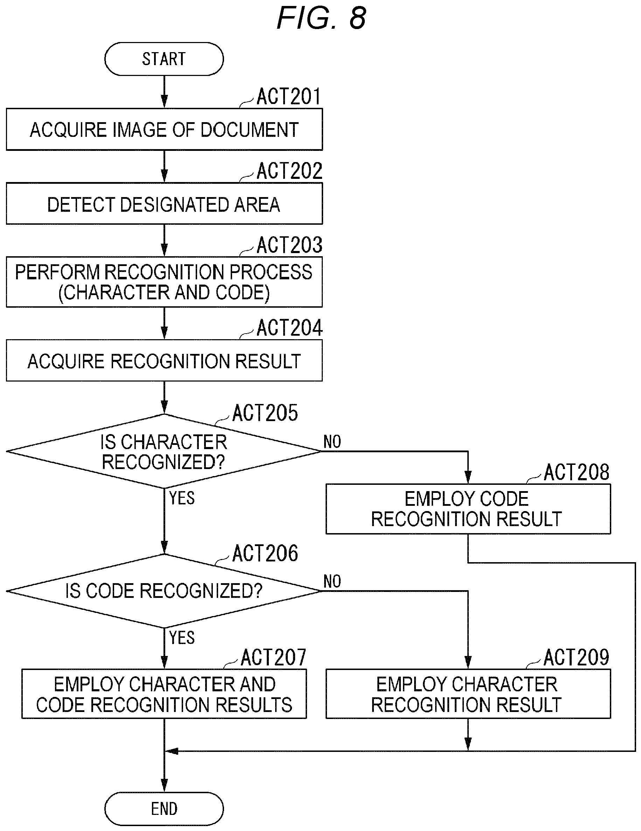

Subsequently, the flow of the recognition process of the image processing device 100 is described. FIGS. 7 and 8 are flowcharts illustrating the flows of the recognition processes. The difference between of FIGS. 7 and 8 is whether to first determine a code recognition result or a character recognition result.

The flowchart of FIG. 7 is described. The control unit 50 acquires a document image read by the image reading unit 200 from a sheet on which a designated area is designated by the user (ACT 101). The control unit 50 detects the designated area from the document image (ACT 102). The control unit 50 performs a character recognition process and a code recognition process on the detected designated area (ACT 103).

The control unit 50 acquires a recognition result by the character recognition process and the code recognition process (ACT 104). In the character recognition process and the code recognition process, a recognition result is output to a file (for example, an eXtensible Markup Language (XML) format). In the character recognition process and the code recognition process, the recognition result may be output to, for example, an area starting from a designated address of a memory.

In the character recognition process, if the character is recognized, the recognized character is output as a character recognition result. In the character recognition process, if a character is not recognized, nothing is output, or a code indicating that a character is not recognized is output. In the code recognition process, if a code is recognized, a recognized code is output as a code recognition result. In the code recognition process, if a code is not recognized, nothing is output, or a code indicating that a character is not recognized is output. For example, if the result is output to a file in an XML format, the result is output in a form in which data is not present between tags indicating output results.

The control unit 50 determines whether the code is recognized by the code recognition process (ACT 105). If the code is not recognized by the code recognition process (ACT 105: NO), the control unit 50 performs the following process. That is, the control unit 50 employs a character recognition result by the character recognition process performed on the area image as a recognition result of the area image (ACT 108), and the process ends.

If the code is recognized by the code recognition process (ACT 105: YES), the control unit 50 determines whether the character is recognized by the character recognition process (ACT 106). If a character is not recognized by the character recognition process (ACT 106: NO), the control unit 50 performs the following process. That is, the control unit 50 employs the code recognition result by the code recognition process performed on the area image as the recognition result of the area image (ACT 109), and the process ends.

If the character is recognized by the character recognition process (ACT 106: YES), the control unit 50 performs the following process. That is, in the following process, the control unit 50 employs the code recognition result by the code recognition process performed on the area image and the character recognition result by the character recognition process performed on the area image as the recognition result of the area image (ACT 107), the process ends.

According to the above, the user does not have to designate whether the information written in the designated area is a character or a code. With the image processing device 100 according to at least one embodiment, it is possible to provide an image processing device in which the usability for the user is improved.

A flowchart of FIG. 7 is described. The control unit 50 acquires the document image read by the image reading unit 200 from the sheet on which the designated area designated by the user is drawn (ACT 201). The control unit 50 detects the designated area from the document image (ACT 202). The control unit 50 performs the character recognition process and the code recognition process on the detected designated area (ACT 203).

The control unit 50 acquires the recognition result by the character recognition process and the code recognition process (ACT 204). The acquisition method is as described in ACT 104.

The control unit 50 determines whether the character is recognized by the character recognition process (ACT 205). If the character is not recognized by the character recognition process (ACT 205: NO), the control unit 50 performs the following process. That is, the control unit 50 employs the code recognition result by the code recognition process performed on the area image as the recognition result of the area image (ACT 208), and the process ends.

If the character is recognized by the character recognition process (ACT 205: YES), the control unit 50 determines whether the code is recognized by the code recognition process (ACT 206). If the character is not recognized by the code recognition process (ACT 206: NO), the control unit 50 performs the following process. That is, the control unit 50 employs the character recognition result by the character recognition process performed on the area image as the recognition result of the area image (ACT 209), the process ends.

If the code is recognized by the code recognition process (ACT 206: YES), the control unit 50 performs the following process. That is, the control unit 50 employs the character recognition result by the character recognition process performed on the area image and code recognition result by the code recognition process performed on the area image as the recognition results of the area image (ACT 207), the process ends.

In this manner, the user does not have to designate whether the information written in the designated area is a character or a code. Therefore, with the image processing device 100 according to at least one embodiment, it is possible to provide an image processing device in which the usability for the user is improved.

In the embodiments described above, the image processing device 100 is used as an example of the image processing device, but the embodiments are not limited thereto. Examples of the image processing device also include a scanner. The scanner can read a sheet and perform an image process on a document image, and thus the present embodiment can be applied.

While certain embodiments have been described these embodiments have been presented by way of example only, and are not intended to limit the scope of the inventions. Indeed, the novel embodiments described herein may be embodied in a variety of other forms. Furthermore various omissions, substitutions and changes in the form of the embodiments described herein may be made without departing from the of the inventions. The accompanying claims and their equivalents are intended to cover such forms or modifications as would fall within the scope and of the inventions.

## Claims

1. An image processing device (100) comprising:
a reader (200) configured to acquire a document image formed on a sheet; and
a controller configured to:
acquire an area image in an area designated in the document image acquired by the reader,
perform a character recognition process and a code recognition process on the area image, and
in response to the character recognition process not recognizing a character, employ a code recognition result by the code recognition process performed on the area image as a recognition result of the area image.

2. The device of claim 1,
wherein, the controller is configured to, in response to the code recognition process not recognizing a code, employ a character recognition result by the character recognition process performed on the area image as the recognition result of the area image.

3. The device of claim 1 or 2,
wherein, the controller is configured to, in response to the code recognition process recognizing a code and the character recognition process recognizing a character, employ the code recognition result by the code recognition process performed on the area image and the character recognition result by the character recognition process performed on the area image as the recognition result of the area image.

4. The device of any one of claims 1 to 3,
wherein a code recognized by the code recognition process is a barcode or a two-dimensional code.

5. The device of any one of claims 1 to 4,
wherein a code recognized by the code recognition process is a stack-type two-dimensional code.

6. An image processing method comprising:
acquiring a document image formed on a sheet;
acquiring an area image in a designated area designated in the document image (ACT101);
performing a character recognition process and a code recognition process on the area image (ACT 103); and
in response to the character recognition process not recognizing a character, employing a code recognition result by a code recognition process performed on the area image as a recognition result of the area image (ACT 109).

7. The method of claim 6,
further comprising, in response to the code recognition process not recognizing a code, employing a character recognition result by the character recognition process performed on the area image as the recognition result of the area image.

8. The method of claim 6 or 7,
further comprising, in response to the code recognition process recognizing a code and the character recognition process recognizing a character, employing the code recognition result by the code recognition process performed on the area image and the character recognition result by the character recognition process performed on the area image as the recognition result of the area image.

9. A non-transitory computer-readable medium storing computer-executable instructions that, when executed by one or more processors, perform operations comprising:
acquiring a document image formed on a sheet;
acquiring an area image in a designated area designated in the document image;
performing a character recognition process and a code recognition process on the area image; and
in response to the character recognition process not recognizing a character, employing a code recognition result by a code recognition process performed on the area image as a recognition result of the area image.

10. The non-transitory computer-readable medium of claim 9, wherein the operations further comprise, in response to the code recognition process not recognizing a code, employing a character recognition result by the character recognition process performed on the area image as the recognition result of the area image.

11. The non-transitory computer-readable medium of claim 9 or 10, wherein the operations further comprise, in response to the code recognition process recognizing a code and the character recognition process recognizing a character, employing the code recognition result by the code recognition process performed on the area image and the character recognition result by the character recognition process performed on the area image as the recognition result of the area image.
